# FASCICULE DE BREVET EUROPEEN

(11) **EP 2 494 119 B1**
(45) Date de publication et mention de la délivrance du brevet: **12.02.2014**
(21) Numéro de dépôt: 10782652.1
(22) Date de dépôt: 29.10.2010
(51) Int. Cl.: C09D 5/22, E04F 19/02, F21V 33/00, F21V 1/14, F21V 17/10, E04B 9/04, F21Y 113/00, E04B 9/32, F21V 9/16, E04F 13/00, E04B 9/30

(54) **Fausse paroi rétro-éclairée à rémanence lumineuse**
Nachleuchtende rückbeleuchtete Vorsatzwand
Back-lit false wall with light persistance

(30) Priorité: 30.10.2009 FR 0905232
(43) Date de publication de la demande: 05.09.2012
(73) Titulaire: Normalu (SAS), 68680 Kembs (FR)
(72) Inventeur: MEYER, Yves, F-68170 Rexheim (FR); SCHERRER, Jean-Marc, F-68400 Riedisheim (FR)
(74) Mandataire: Breesé, Pierre
(86) Numéro de dépôt international: PCT/FR2010/000717
(87) Numéro de publication internationale: WO 2011/051579

(56) Documents cités:
- DE-A1- 10 253 343
- FR-A1- 2 308 155
- FR-A1- 2 868 449

## Description

La présente invention concerne une fausse paroi rétro-éclairée par des sources de lumière, de préférence un faux plafond, pouvant également être employée pour un caisson lumineux, permettant de palier une extinction volontaire ou non desdites sources de lumières.

Les fausses parois, notamment les faux plafonds, comprennent classiquement une ou plusieurs lisses d'accrochage qui sont fixées sur chacun des murs et/ou plafonds d'un local, et une nappe souple et généralement opaque, qui est déformée par tension afin que ses bords, pourvus de moyens d'accrochage, puissent venir se fixer auxdites lisses à l'aide de ces moyens d'accrochage, en prenant soin de bien tendre la toile afin d'offrir un bel aspect. Cette toile est donc tendue parallèlement à une paroi du local de sorte à laisser un espace résiduel situé entre la paroi dudit local et ladite toile. Cet espace résiduel, aussi nommé vélum, permet de loger tous les équipements inesthétiques tels que des câbles électriques, des tuyauteries, etc. Par conséquent, ladite toile permet de masquer ces équipements mais aussi les imperfections des parois du local et d'avoir une surface visible uniforme et propre en retenant notamment les poussières dans ce vélum.

Toutefois, si l'on souhaite rétro-éclairer le local, puisqu'on ne peut évidemment pas fixer de sources de lumière sur la toile souple, il faut donc mettre en place des sources de lumière dans le vélum en utilisant une toile translucide de façon à ce que les rayons lumineux puissent éclairer le local, ou prévoir une pluralité de caissons lumineux aptes à être intégrés à une paroi ou une fausse paroi et contenant une pluralité de sources de lumière destinées à rétro-éclairer une fausse paroi recouvrant au moins la face inférieure horizontale ouverte desdits caissons lumineux. A titre d'exemple, la demande de brevet

### DE10253343 décrit une telle fausse paroi.

Le principal inconvénient de ce type d'éclairage est que les sources de lumière sont de type tubes fluorescents alimentés par le réseau électrique local et qu'en cas de coupure de courant volontaire ou non, le local n'est plus éclairé, ce qui peut être dommageable en cas de sinistre notamment de type incendie.

Par ailleurs, la toile de la fausse paroi peut être imprimée de motifs et rétro-éclairée à des fins esthétiques, décoratives et/ou publicitaires. En cas d'extinction des sources de lumière, l'effet recherché est évidemment moins visible voire plus visible du tout.

On connaît bien évidemment des éclairages dits de secours, d'appoint ou bien encore de balisage se mettant à fonctionner lorsque les sources de lumières principales s'éteignent, mais ces derniers sont souvent visibles et peu esthétiques, et entraînent un surcoût important de l'installation, car ils nécessitent la mise en place d'un deuxième circuit électrique alimenté en général en basse tension.

Le but de la présente invention est donc de pallier les inconvénients précédemment cités et de proposer une fausse paroi rétro-éclairée par une pluralité de sources de lumière permettant de palier une extinction volontaire desdites sources de lumières ou des coupures de courant intempestives et d'assurer un rétro-éclairage permettant de remplacer au moins en partie l'éclairage desdites sources de lumière. En outre, cette fausse paroi rétro-éclairée est particulièrement simple à mettre en oeuvre et économique car elle ne nécessite ni équipement supplémentaire, ni énergie électrique durant son fonctionnement.

A cet égard, la présente invention concerne une fausse paroi rétro-éclairée par une pluralité de sources de lumières placées derrière elle et comportant au moins une nappe souple translucide tendue accrochée par ses bordures pourvues de moyens d'accrochage à un cadre, ledit cadre étant constitué par une lisse formée de profils aboutés et comprenant des organes de réception aptes à coopérer avec lesdits moyens d'accrochage pour maintenir ladite nappe souple translucide tendue, remarquable en ce que la lisse comporte des moyens d'éclairage invisibles lorsque les sources de lumière fonctionnent et assurant une rémanence lumineuse lorsque les sources de lumière ne fonctionnent plus.

Selon un mode de réalisation préféré, les moyens d'éclairage comprennent des faces de la lisse situées derrière la nappe souple translucide, orientées au moins en partie en regard de ladite nappe souple translucide et recouvertes de peinture photo-luminescente.

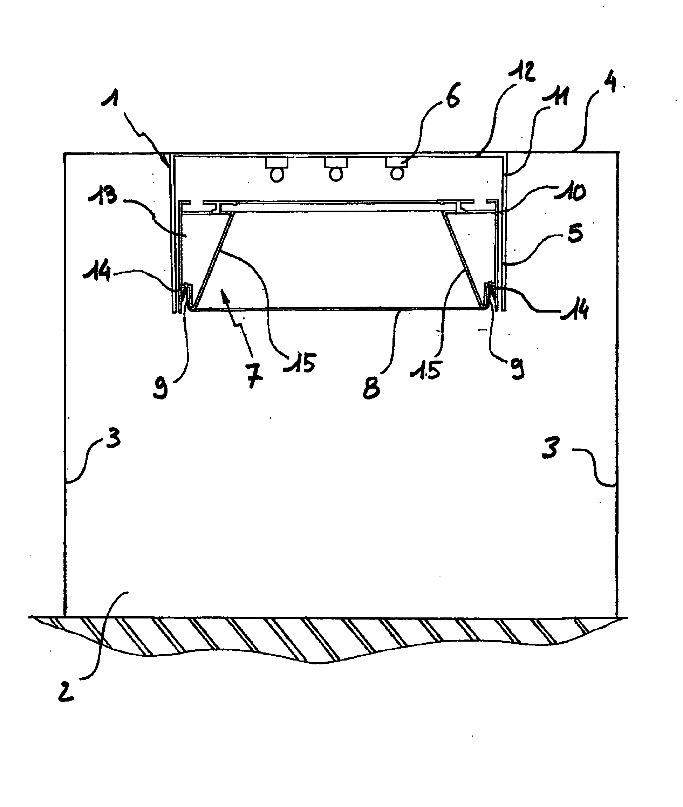

D'autres avantages et caractéristiques ressortiront mieux de la description qui va suivre d'une forme d'exécution, donnée à titre d'exemple non limitatif, d'un caisson lumineux muni d'une fausse paroi rétro-éclairée selon l'invention en référence à la figure unique annexée, qui est une vue en coupe verticale partielle d'un caisson lumineux muni d'une fausse paroi rétro-éclairée conforme à l'invention.

On décrira dans cette variante d'exécution non limitative, un caisson lumineux muni d'une fausse paroi rétro-éclairée et fixé sur un plafond ; toutefois, la fausse paroi rétro-éclairée, selon l'invention, peut évidemment être employée pour un caisson lumineux fixé sur un mur, un faux plafond tendu rétro-éclairé ou encore un faux mur tendu rétro-éclairé.

On a représenté sur la figure unique, un caisson lumineux 1 destiné à éclairer un local 2 délimité par des murs 3 et un plafond 4. Ledit caisson lumineux 1 comporte une enveloppe 5 contenant une pluralité de sources de lumières 6 destinées à rétro-éclairer une fausse paroi 7, lesdites sources de lumières 6 étant placées derrière la fausse paroi 7. Cette dernière est constituée d'au moins une nappe souple translucide 8 accrochée par ses bordures pourvues de moyens d'accrochage 9 à un cadre 10, ledit cadre 10 étant mobile notamment pour permettre l'accès auxdites sources de lumière 6 situées dans l'enveloppe 5 du caisson lumineux 1.

A cet égard, le cadre 10 est, en fonctionnement, logé dans l'enveloppe 5 du caisson lumineux 1, comme représenté sur la figure unique et peut être de préférence basculé hors de l'enveloppe 5, notamment pour la maintenance (position non représentée).

L'enveloppe 5 est formée de côtés 11, définissant avantageusement un quadrilatère, sur lesquels est monté un fond 12. Cette enveloppe 5 est destinée à être fixée à une paroi, telle qu'un mur ou un plafond comme dans cet exemple. Le cadre 10 est constitué d'une lisse 13 formée de profils aboutés, comprenant des organes de réception 14 aptes à coopérer avec lesdits moyens d'accrochage 9 de la nappe souple translucide 8 tendue là la base de ladite lisse 13.

Le cadre 10 interne est apte à basculer par rotation autour d'un axe parallèle à l'un des côtés du caisson lumineux 1. Pour maintenir le cadre 10 en position de fermeture dite de fonctionnement, le caisson lumineux 1 comporte au moins une fermeture (non représentée) de préférence de type à encliquetage.

Les sources de lumière 6 sont situées derrière la nappe translucide 8 et sont avantageusement des tubes néons montés sur le fond 12 de l'enveloppe 5. Ainsi, on comprend, que lorsque les sources de lumière 6 fonctionnent, le rayonnement lumineux émis par lesdites sources de lumière 6 traverse la nappe souple translucide 8 et éclaire le local 2 situé devant la nappe souple translucide 8.

On désigne ici par "devant" et par "derrière" de la nappe souple translucide 8, les zones qui se trouvent respectivement du côté du local 2 et du côté opposé au local par rapport à ladite nappe souple translucide 8. Dans le cas de fausse paroi, le terme "derrière" désignera la zone située dans le vélum.

Ainsi avec une configuration telle que décrite précédemment, lorsque les sources de lumière 6 sont éteintes de façon volontaire ou non, le local 2 n'est évidemment plus éclairé.

Pour pallier à cet inconvénient, la lisse 13 de la fausse paroi 7 comporte des moyens d'éclairage 15 permettant de remplacer au moins en partie l'éclairage desdites sources de lumière 6, lorsque ces dernières sont éteintes.

Les moyens d'éclairage 15 sont aptes, d'une part, à stocker l'énergie lumineuse émise par les sources de lumière 6 pendant leur fonctionnement et, d'autre part, à restituer ladite énergie au travers de la nappe souple translucide 8 de la fausse paroi 7 vers le local 2 lorsque les sources de lumière 6 ne fonctionnent plus.

Dans un mode de réalisation préférentiel, les moyens d'éclairage 15 sont constitués par des faces de la lisse 13 situées derrière la nappe souple translucide 8, de préférence orientées au moins en partie en regard de ladite nappe souple translucide 8 et recouvertes de peinture photo-luminescente.

On comprend bien que plus le local est sombre et plus les moyens d'éclairage 15 sont visibles au travers de la nappe souple translucide 8 depuis le local 2.

Avec une telle configuration, on comprend bien que la fausse paroi 7 ne nécessite ni équipement supplémentaire, ni énergie électrique et est donc particulièrement économique et facile à mettre en oeuvre.

En outre, cette fausse paroi 7 ne nuit pas à l'esthétique d'ensemble du caisson, car ses moyens d'éclairage 15 sont placés derrière la nappe souple translucide 8 et donc invisibles lorsque les sources de lumière 6 fonctionnent. Les moyens d'éclairage 15 ne sont visibles que lorsque les sources de lumière 6 ne fonctionnent plus, grâce à l'énergie lumineuse qu'ils restituent au travers de la nappe souple translucide 8.

Le cadre 10 pourra être équipé d'une seconde nappe tendue, par exemple transparente, située derrière la première nappe souple translucide 8 entre cette dernière et les sources de lumière 6, sans sortir du cadre de la présente invention.

De même, on comprend bien que le cadre 10 pourra être directement fixé sur chacun des murs 3 et/ou plafond 4 d'un local 2, afin de maintenir par ses bords une nappe souple translucide 8 et ainsi de réaliser une fausse paroi rétro-éclairée par une pluralité de sources de lumière 6 placées derrière elle dans l'espace résiduel situé entre le mur 3 et/ou plafond 4 du local 2 et ladite nappe souple translucide 8.

Enfin, il va de soi que l'exemple de système de fixation 7 de fausse paroi tendue rétro-éclairée conforme à l'invention qui vient d'être décrit n'est qu'une illustration particulière, en aucun cas limitative de l'invention ; il est notamment applicable pour le balisage de nuit ou encore pour assurer la sécurité des locaux en cas de coupures d'électricité, ou même, la décoration d'ensemble sous très faible éclairage.

## Revendications

1. Fausse paroi (7) rétro-éclairée par une pluralité de sources de lumière (6) placées derrière elle et constituée d'au moins une nappe souple translucide (8) tendue accrochée par ses bordures pourvues de moyens d'accrochage (9) à un cadre (10), ledit cadre (10) étant constitué par une lisse (13) formée de profils aboutés et comprenant des organes de réception (14) aptes à coopérer avec lesdits moyens d'accrochage (9) pour maintenir ladite nappe souple translucide (8) tendue, **caractérisée en ce que** la lisse (13) comporte des moyens d'éclairage (15) invisibles lorsque les sources de lumière (6) fonctionnent et assurant une rémanence lumineuse lorsque les sources de lumière (6) ne fonctionnent plus.

2. Fausse paroi (7) selon la revendication précédente, **caractérisée en ce que** les moyens d'éclairage (15) sont aptes, d'une part, à stocker l'énergie lumineuse émise par les sources de lumière (6) pendant leur fonctionnement et, d'autre part, à restituer ladite énergie au travers de la nappe souple translucide (8) lorsque les sources de lumière (6) ne fonctionnent plus.

3. Fausse paroi (7) selon la revendication précédente, **caractérisée en ce que** les moyens d'éclairage (15) sont constitués par des faces de la lisse (13) situées derrière la nappe souple translucide (8), orientées au moins en partie en regard de ladite nappe souple translucide (8) et recouvertes de peinture photo-luminescente.

4. Caisson lumineux (1), **caractérisé en ce qu'**il comporte une fausse paroi (7) rétro-éclairée selon l'une quelconque des revendications précédentes.

## Patentansprüche

1. Von hinten durch eine Vielzahl von hinter ihr platzierten Lichtquellen (6) beleuchtete und durch wenigstens eine durchscheinende elastische Bahn (8) gebildete, an ihren mit Befestigungsmitteln (9) an einem Rahmen (10) versehenen Rändern aufgehängte eingezogene Wand (7), wobei der genannte Rahmen (10) durch einen durch stumpf aneinander gefügte Profile geformten Träger (13) mit Aufnahmeorganen (14) gebildet wird, die geeignet sind, mit den genannten Befestigungsmitteln (9) zusammenzuwirken, um die genannte durchscheinende elastische Bahn (8) gespannt zu halten, **dadurch gekennzeichnet, dass** der Träger (13) unsichtbare Beleuchtungsmittel (15) umfasst, wenn die Lichtquellen (6) funktionieren und ein Nachleuchten gewährleisten, wenn die Lichtquellen (6) nicht mehr funktionieren.

2. Eingezogene Wand (7) gemäß dem voranstehenden Anspruch, **dadurch gekennzeichnet, dass** die Beleuchtungsmittel (15) geeignet sind, einerseits die von den Lichtquellen (6) während ihres Betriebs ausgegebene Leuchtenergie zu speichern und andererseits die genannte Energie durch die durchscheinende elastische Bahn (8) wiederzugeben, wenn die Lichtquellen (6) nicht mehr funktionieren.

3. Eingezogene Wand (7) gemäß dem voranstehenden Anspruch, **dadurch gekennzeichnet, dass** die Beleuchtungsmittel (15) durch Flächen der Träger (13) gebildet sind, die sich hinter der durchscheinenden elastischen Fläche (8) befinden, und wenigstens zum Teil gegenüber der durchscheinenden elastischen Fläche (8) ausgerichtet sind und mit photolumineszentem Farblack beschichtet sind.

4. Leuchtkassette (1), **dadurch gekennzeichnet, dass** sie eine von hinten beleuchtete eingezogene Wand (7) gemäß einem der voranstehenden Ansprüche umfasst.

## Claims

1. A false wall (7) backlit by a plurality of light sources (6) positioned behind same and consisting of at least one stretched translucent flexible sheet (8) attached by its edges provided with means for attaching (9) same to a frame (10), with said frame being constituted by a wall rail (13) formed by abutting profiles and comprising receiving members (14) adapted to cooperate with said attaching means to maintain said translucent flexible sheet stretched, **characterized in that** said wall rail (13) comprises lighting means (15) which are not visible when the light sources (6) are operating and providing light persistence when the light sources (6) are no longer operating.

2. A false wall (7) according to the preceding claim, **characterized in that** the lighting means (15) are adapted, on the one hand, to store the light energy emitted by the light sources (6) when they are operating, and, on the other hand, to release said energy through the translucent flexible sheet when the light sources (6) are no longer operating.

3. A false wall (7) according to the preceding claim, **characterized in that** the lighting means (15) are constituted by faces of the wall rail (13) which are located behind the translucent flexible sheet (8), at least partly oriented opposite said translucent flexible sheet (8) and covered with a photo-luminescent paint.

4. A light-box (1), **characterized in that** it comprises a backlit false wall (7) according to any one of the preceding claims.
